# FASCICULE DE BREVET EUROPEEN

(11) **EP 1 260 107 B1**
(45) Date de publication et mention de la délivrance du brevet: **07.06.2006**
(21) Numéro de dépôt: 01909916.7
(22) Date de dépôt: 28.02.2001
(51) Int. Cl.: H04Q 7/22, H04L 29/06

(54) **PROCEDE POUR ECHANGER DES INFORMATIONS ENTRE PLUSIEURS UTILISATEURS DE TELEPHONES MOBILES**
VERFAHREN ZUM INFORMATIONSAUSTAUSCH ZWISCHEN MOBILTELEFON BENUTZER
METHOD FOR INFORMATION EXCHANGE BETWEEN SEVERAL MOBILE TELEPHONE USERS

(30) Priorité: 29.02.2000 FR 0002503
(43) Date de publication de la demande: 27.11.2002
(73) Titulaire: Freever, 75008 Paris (FR)
(72) Inventeur: TISSOT, Philippe, F-75016 Paris (FR); THIRIET, Fabien, F-45100 Orleans (FR)
(74) Mandataire: Grynwald, Albert
(86) Numéro de dépôt international: PCT/FR2001/000574
(87) Numéro de publication internationale: WO 2001/065874

(56) Documents cités:
- WO-A-01/24551
- WO-A-98/16045
- WO-A-99/34628
- WO-A-99/66757
- ESCHENBURG A: "WO LAUFEN SIE DENN? ICQ HAELT VERBINDUNG ZU BEKANNTEN" CT MAGAZIN FUER COMPUTER TECHNIK,DE,VERLAG HEINZ HEISE GMBH., HANNOVER, no. 22, 26 octobre 1998 (1998-10-26), pages 92-95, XP000779803 ISSN: 0724-8679

## Description

La présente invention concerne un procédé pour échanger, en temps réel ou quasi-réel, des informations, notamment des messages écrits ou des messages audio, entre plusieurs membres d'une population de personnes disposant d'un téléphone mobile susceptible d'être connecté à un serveur via un réseau de communication.

Il existe des limites importantes à l'échange de messages écrits ou audio entre utilisateurs de téléphones mobiles et, par voie de conséquence, à la constitution de forums de discussion et à la gestion de communautés d'utilisateurs.

A ce jour, les solutions existantes ne permettent pas de transposer aux réseaux de téléphonie mobile les systèmes déjà mis en oeuvre sur d'autres réseaux de communication, notamment de type Internet. Elles présentent les inconvénients suivants : la consultation des messages de manière asynchrone n'est pas possible, l'envoi d'un message est toujours déterministe (les destinataires doivent être prédéterminés avant l'envoi d'un message), les utilisateurs ne peuvent pas être regroupés selon leur profil ou centres d'intérêts.

L'état antérieur de la technique est illustré par les documents WO-A-98/16045 et WO-A-99/34628.

Le procédé, selon l'invention, permet d'échanger, en temps réel ou quasi-réel, des informations, notamment des messages écrits ou des messages audio, entre plusieurs membres d'une population de personnes disposant d'un téléphone mobile susceptible d'être connecté à un serveur via un réseau de communication.

Ce procédé comprend plusieurs étapes.

Il comprend l'étape d'émettre vers ledit serveur un signal d'identification, à partir de chaque téléphone mobile détenu par une personne désirant échanger en temps réel des informations. Ledit signal d'identification comporte des informations concernant l'état du téléphone mobile considéré. Par état, au sens de la présente invention, on entend l'état "connecté", ou l'état "connecté et occupé", ou l'état "connecté et libre", ou l'état "connecté et caché", ou l'état "connecté et formulant une requête", ou l'état "déconnecté pour une durée limitée". Ledit état est déterminé par le serveur et/ou paramétré par l'utilisateur de chaque téléphone mobile. Lorsque ledit état est paramétré par le serveur, il n'est pas nécessaire d'émettre vers ledit serveur un signal d'identification comportant ledit état.

Le procédé comprend en outre les étapes suivantes :
- l'étape de dresser périodiquement et de mémoriser dans ledit serveur la liste des personnes désirant échanger des informations et ayant émis, au moyen de leur téléphone mobile, ledit signal d'identification,
- l'étape de visualiser sur un écran d'un premier téléphone mobile et/ou d'émettre au moyen d'un haut-parleur d'un premier téléphone mobile ladite liste ou une liste restreinte de personnes sélectionnées parmi les personnes de ladite liste.

Cette liste restreinte peut être notamment établie par l'utilisateur au moyen des organes de commande de son téléphone mobile. Cette liste restreinte peut aussi être constituée d'une toute autre manière et mémorisée dans le serveur, ainsi qu'il sera précisé ci-après.

Dans une première variante de réalisation, le procédé comprend l'étape d'émettre vers ledit serveur, à partir du premier téléphone mobile, un signal de demande de téléchargement. Le signal de demande de téléchargement dans ledit premier téléphone mobile concerne l'état des téléphones mobiles détenus par les personnes figurant sur ladite liste ou sur la liste restreinte.

Alternativement, dans une deuxième variante de réalisation, le procédé comprend l'étape d'émettre, à partir du serveur vers le premier téléphone mobile, l'état des téléphones mobiles détenus par les personnes figurant sur ladite liste ou sur la liste restreinte.

Ainsi, quelle que soit la variante de réalisation mise en oeuvre, l'utilisateur dudit premier téléphone mobile sait à tout moment quelles sont les personnes avec lesquelles il peut échanger des informations.

Dans une variante de réalisation, le procédé comprend en outre l'étape d'émettre vers ledit serveur, à partir dudit premier téléphone mobile, un signal de demande d'interconnexion, voix ou texte, avec tout ou partie des téléphones mobiles des personnes figurant sur ladite liste ou sur la liste restreinte, en tenant compte de l'état de leur téléphone mobile.

Dans une autre variante de réalisation, alternative de la précédente, le procédé comprend l'étape d'émettre vers ledit premier téléphone mobile, à partir du serveur, un signal de demande d'interconnexion, voix ou texte, avec un ou plusieurs des téléphones mobiles des personnes figurant sur ladite liste ou sur la liste restreinte, en tenant compte de l'état de leur téléphone mobile, notamment de l'état connecté et formulant une requête.

Ainsi, quelle que soit la variante de réalisation mise en oeuvre, les personnes interconnectées peuvent échanger des informations en temps réel ou quasi-réel.

Pour établir ladite liste restreinte des personnes sélectionnées, on peut procéder de différentes façons.

De préférence, dans une variante de réalisation, le serveur transmet audit premier téléphone mobile, soit directement soit sur requête dudit premier téléphone mobile, ladite liste sous une forme telle que l'utilisateur puisse en prendre connaissance de manière auditive et/ou visuelle et puisse sélectionner sur ladite liste une liste restreinte.

De préférence, dans une autre variante de réalisation, l'utilisateur établit tout ou partie de ladite liste restreinte par ses propres moyens, notamment à la faveur de contacts avec d'autres membres.

Avantageusement, selon l'invention, l'utilisateur transmet au serveur ladite liste restreinte ou les modifications apportées à ladite liste restreinte, au moyen dudit premier téléphone mobile.

De préférence, selon l'invention, le serveur transmet périodiquement audit premier téléphone mobile ladite liste ou la liste restreinte mise à jour.

De préférence, selon l'invention, l'état "connecté et formulant une requête" comporte les requêtes suivantes :
- requête d'établissement automatique d'une interconnexion avec les téléphones mobiles ayant formulé la même requête,
- requête définissant des champs d'intérêts,
- requête de changement d'état.

Le procédé, selon l'invention, est plus particulièrement destiné à rechercher les personnes situées à proximité les unes des autres. De manière connue en soi, ledit réseau de communication est décomposé en cellules correspondant chacune à une aire géographique déterminée. Lesdites cellules sont identifiées par un numéro de cellule. Les numéros des cellules où sont situés lesdits téléphones mobiles sont transmis et répertoriés dans une zone mémoire dudit serveur. Les numéros des cellules peuvent être également transmis et répertoriés dans une zone mémoire desdits téléphones mobiles. Le procédé comprend en outre, dans ce dernier cas, l'étape d'émettre ledit numéro de cellule vers ledit serveur, à partir de chaque téléphone mobile détenu par une personne désirant échanger en temps réel des informations.

Le procédé, destiné à rechercher les personnes situées à proximité les unes des autres, comprend en outre les étapes suivantes :
- l'étape de déterminer, au moyen desdits numéros de cellules, les téléphones mobiles situés dans la même cellule ou dans des cellules voisines,
- l'étape de télécharger ladite liste ou ladite liste restreinte dans ledit premier téléphone mobile en indiquant par une marque, audio ou visuelle, les personnes dont le téléphone mobile est situé soit dans la même cellule que celle où est situé ledit premier téléphone mobile, soit dans des cellules voisines de celle où est situé ledit premier téléphone mobile.

Ainsi, la personne détenant ledit premier téléphone mobile connaît les personnes qui sont dans son aire géographique et peut les contacter afin de les rencontrer.

L'invention concerne également un système pour échanger, en temps réel ou quasi-réel, des informations, notamment des messages écrits ou des messages audio, entre plusieurs membres d'une population de personnes disposant d'un téléphone mobile susceptible d'être connecté à un serveur via un réseau de communication.

Ledit système comprend des moyens de traitement pour produire un signal d'identification. Ledit signal d'identification comporte des informations concernant l'état du téléphone mobile considéré. Par état, au sens de la présente invention, on entend l'état "connecté", ou l'état "connecté et occupé", ou l'état "connecté et libre", ou l'état "connecté et caché", ou l'état "connecté et formulant une requête", ou l'état "déconnecté pour une durée limitée".

Ledit serveur dudit système comprend des moyens de calcul pour déterminer ledit état, et/ou ledit téléphone mobile comprend des moyens de paramétrage pour paramétrer ledit état. Lesdits moyens de paramétrage sont actionnables par l'utilisateur du téléphone mobile.

Ledit téléphone mobile comprend des moyens d'émission pour émettre vers ledit serveur tout ou partie dudit signal d'identification.

Ledit serveur dudit système comprend en outre des moyens de calcul et de mémorisation pour dresser périodiquement et pour mémoriser la liste des personnes désirant échanger des informations et ayant émis, au moyen de leur téléphone mobile, tout ou partie dudit signal d'identification.

Lesdits téléphones mobiles comprennent en outre des moyens de visualisation pour visualiser sur un écran ladite liste ou une liste restreinte de personnes sélectionnées parmi les personnes de ladite liste, et/ou un haut-parleur pour émettre ladite liste ou une liste restreinte de personnes sélectionnées parmi les personnes de ladite liste.

Dans une première variante de réalisation dudit système, chaque téléphone mobile comprend en outre des moyens d'émission pour émettre vers ledit serveur un signal de demande de téléchargement de l'état des téléphones mobiles détenus par les personnes figurant sur ladite liste ou sur la liste restreinte, dans le téléphone mobile concerné.

Alternativement, dans une deuxième variante de réalisation dudit système, ledit serveur comprend des moyens d'émission pour émettre vers le téléphone mobile concerné l'état des téléphones mobiles détenus par les personnes figurant sur ladite liste ou sur la liste restreinte.

Ainsi, quelle que soit la variante de réalisation mise en oeuvre, l'utilisateur dudit téléphone mobile concerné sait à tout moment quelles sont les personnes avec lesquelles il peut échanger des informations.

Dans une variante de réalisation dudit système, ledit téléphone mobile concerné comprend des moyens d'émission pour émettre vers ledit serveur un signal de demande d'interconnexion, voix ou texte, avec tout ou partie des téléphones mobiles des personnes figurant sur ladite liste ou sur la liste restreinte, en tenant compte de l'état de leur téléphone mobile.

Dans une autre variante de réalisation dudit système, alternative de la précédente, ledit serveur comporte des moyens d'émission pour émettre vers chaque téléphone mobile un signal de demande d'interconnexion, voix ou texte, avec un ou plusieurs des téléphones mobiles des personnes figurant sur ladite liste ou sur la liste restreinte, en tenant compte de l'état de leur téléphone mobile, notamment de l'état connecté et formulant une requête.

Ainsi, quelle que soit la variante de réalisation mise en oeuvre, les personnes interconnectées peuvent échanger des informations en temps réel ou quasi-réel.

De préférence, pour établir ladite liste restreinte des personnes sélectionnées, le serveur dudit système comporte des moyens de transmission pour transmettre au téléphone mobile concerné, soit directement soit sur requête dudit téléphone mobile concerné, ladite liste sous une forme telle que l'utilisateur puisse en prendre connaissance de manière auditive et/ou visuelle et puisse sélectionner sur ladite liste une liste restreinte.

Avantageusement, les moyens de transmission dudit système comportent des moyens pour transmettre périodiquement au téléphone mobile concerné ladite liste ou la liste restreinte mise à jour.

Avantageusement, le téléphone mobile concerné comporte des moyens d'émission pour transmettre au serveur ladite liste restreinte ou les modifications apportées à ladite liste restreinte.

De préférence, l'état "connecté et formulant une requête" comporte les requêtes suivantes :
- requête d'établissement automatique d'une interconnexion avec les téléphones mobiles ayant formulé la même requête,
- requête définissant des champs d'intérêts,
- requête de changement d'état.

Le système, selon l'invention, est plus particulièrement destiné à rechercher les personnes situées à proximité les unes des autres. De manière connue en soi, ledit réseau de com-munication est décomposé en cellules correspondant chacune à une aire géographique déterminée. Lesdites cellules sont identifiées par un numéro de cellule. Ledit serveur comporte une zone mémoire dans laquelle sont répertoriés les numéros des cellules où sont situés lesdits téléphones mobiles. Lesdits téléphones mobiles peuvent également comporter une zone mémoire dans laquelle sont répertoriés les numéros des cellules où ils sont situés. Ledit téléphone mobile, dans ce dernier cas, comprend en outre des moyens d'émission pour émettre ledit numéro de cellule vers ledit serveur.

Ledit serveur comprend en outre des moyens de calcul pour déterminer, au moyen desdits numéros de cellules, les téléphones mobiles situés dans la même cellule ou dans des cellules voisines.

Ledit serveur comprend en outre des moyens de téléchargement pour télécharger ladite liste ou ladite liste restreinte dans le téléphone mobile concerné en indiquant par une marque, audio ou visuelle, les personnes dont le téléphone mobile est situé dans la même cellule que celle où est situé le téléphone mobile concerné, ou dans des cellules voisines de celle où est situé le téléphone mobile concerné.

Ainsi, la personne détenant le téléphone mobile concerné connaît les personnes qui sont dans son aire géographique et peut les contacter afin de les rencontrer.

L'invention concerne également un serveur permettant à plusieurs membres d'une population de personnes d'échanger, en temps réel ou quasi-réel, des informations, notamment des messages écrits ou des messages audio.

Lesdites personnes disposent de téléphones mobiles susceptibles d'être connectés audit serveur via un réseau de communication. Ledit serveur comprend des moyens de calcul pour déterminer l'état du téléphone mobile considéré.

Par état, au sens de la présente invention, on entend l'état "connecté", ou l'état "connecté et occupé", ou l'état "connecté et libre", ou l'état "connecté et caché", ou l'état "connecté et formulant une requête", ou l'état "déconnecté pour une durée limitée".

Ledit serveur comprend en outre des moyens de calcul et de mémorisation pour dresser périodiquement et pour mémoriser la liste des personnes désirant échanger des informations ; lesdites personnes ayant émis, au moyen de leur téléphone mobile, tout ou partie d'un signal d'identification ; ledit signal d'identification comportant des informations concernant l'état du téléphone mobile considéré.

Ledit serveur comprend en outre des moyens d'émission pour émettre vers le téléphone mobile concerné l'état des téléphones mobiles détenus par les personnes figurant sur ladite liste ou sur la liste restreinte.

Ainsi, l'utilisateur dudit téléphone mobile concerné sait à tout moment quelles sont les personnes avec lesquelles il peut échanger des informations.

Ledit serveur comprend en outre des moyens d'émission pour émettre vers chaque téléphone mobile un signal de demande d'interconnexion, voix ou texte, avec un ou plusieurs des téléphones mobiles des personnes figurant sur ladite liste ou sur la liste restreinte, en tenant compte de l'état de leur téléphone mobile, notamment de l'état connecté et formulant une requête.

Ainsi, les personnes interconnectées peuvent échanger des informations en temps réel ou quasi-réel.

De préférence, le serveur selon l'invention comporte des moyens de transmission pour transmettre au téléphone mobile concerné, soit directement soit sur requête dudit téléphone mobile concerné, ladite liste sous une forme telle que l'utilisateur puisse en prendre connaissance de manière auditive et/ou visuelle et puisse sélectionner sur ladite liste une liste restreinte.

De préférence, le serveur selon l'invention comporte des moyens de transmission pour transmettre périodiquement au téléphone mobile concerné ladite liste ou la liste restreinte mise à jour.

De préférence, selon l'invention, l'état "connecté et formulant une requête" comporte les requêtes suivantes :
- requête d'établissement automatique d'une interconnexion avec les téléphones mobiles ayant formulé la même requête,
- requête définissant des champs d'intérêts,
- requête de changement d'état.

Le serveur, selon l'invention, est plus particulièrement destiné à rechercher les personnes situées à proximité les unes des autres. De manière connue en soi, ledit réseau de communication est décomposé en cellules correspondant chacune à une aire géographique déterminée. Lesdites cellules sont identifiées par un numéro de cellule.

Ledit serveur comporte une zone mémoire dans laquelle sont répertoriés les numéros des cellules où sont situés lesdits téléphones mobiles.

Ledit serveur comprend en outre des moyens de calcul pour déterminer, au moyen desdits numéros de cellules, les téléphones mobiles situés dans la même cellule ou dans des cellules voisines.

Ledit serveur comprend en outre des moyens de téléchargement pour télécharger ladite liste ou ladite liste restreinte dans le téléphone mobile concerné en indiquant par une marque, audio ou visuelle, les personnes dont le téléphone mobile est situé dans la même cellule que celle où est situé le téléphone mobile concerné ou dans des cellules voisines de celle où est situé le téléphone mobile concerné.

Ainsi, la personne détenant le téléphone mobile concerné connaît les personnes qui sont dans son aire géographique et peut les contacter afin de les rencontrer.

D'autres caractéristiques et avantages de l'invention apparaîtront à la lecture de la description de variantes de réalisation de l'invention, données à titre d'exemple indicatif et non limitatif, et de :

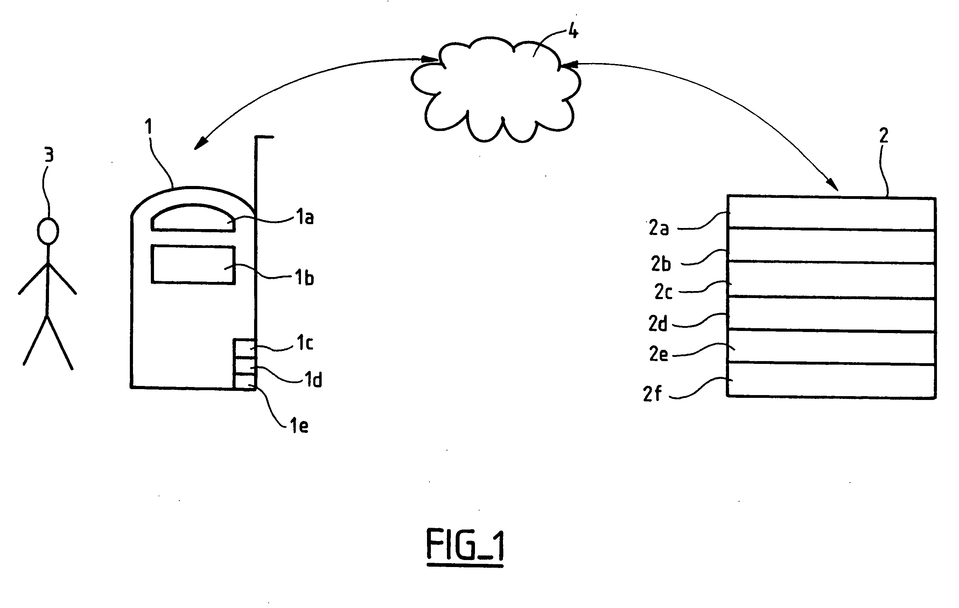

la figure 1 présentant une vue schématique d'un utilisateur désirant échanger des informations et disposant d'un téléphone mobile connecté à un serveur via un réseau de communication,

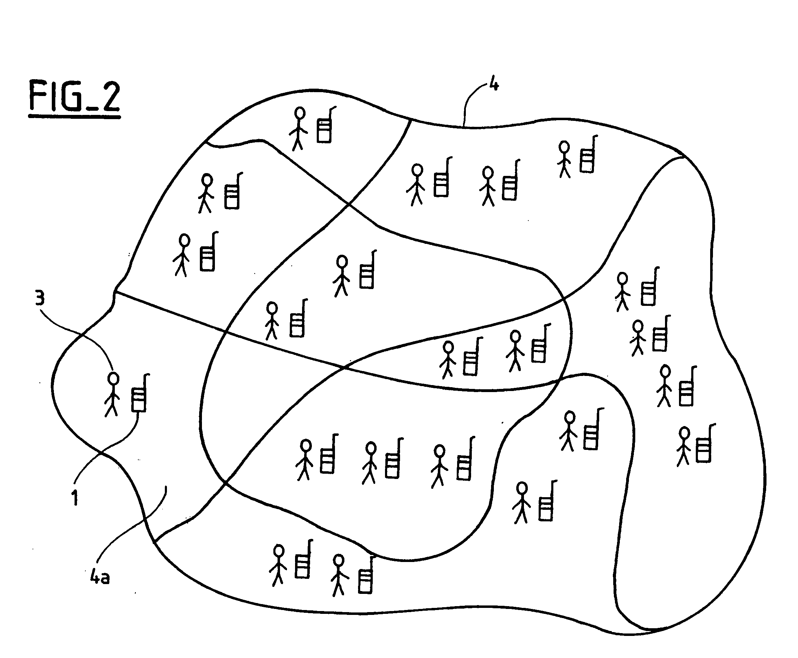

la figure 2 présentant de manière schématique un réseau de communication découpé en cellules correspondant chacune à une aire géographique déterminée,

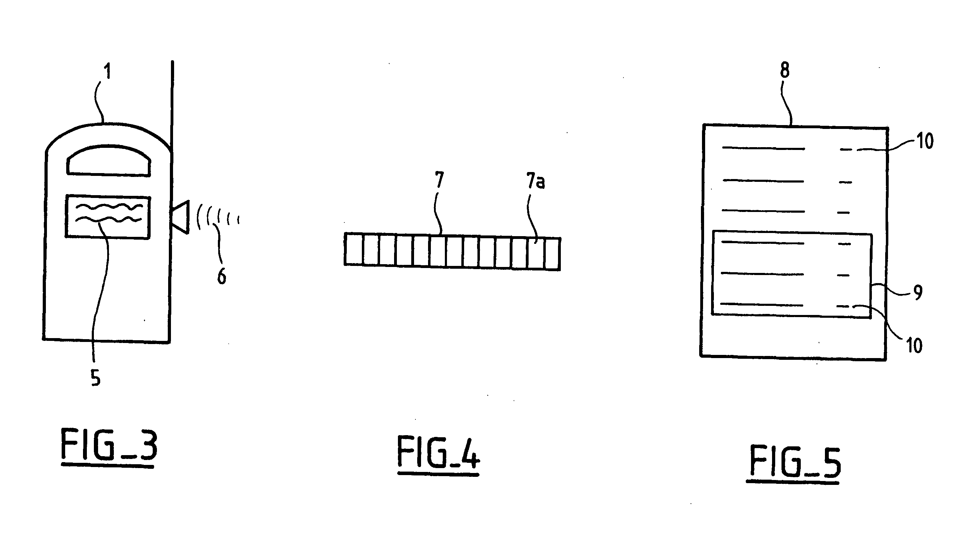

la figure 3 présentant de manière schématique un message écrit et un message audio, émis à partir d'un téléphone mobile,
la figure 4 présentant de manière schématique un signal d'identification comportant des informations relatives à l'état du téléphone mobile,
la figure 5 présentant de manière schématique la liste des personnes ayant émis, au moyen de leur téléphone mobile, ledit signal d'identification et désirant échanger des informations, ainsi qu'une liste restreinte de personnes sélectionnées parmi les personnes de ladite liste.

On va maintenant décrire les figures.

Dans la suite de la description, chaque utilisateur sera réputé disposer d'un téléphone mobile identique à celui qui sera ci-après décrit en utilisant les références 1, 1a, 1b, 1c, 1d, le.

Un utilisateur 3, désire échanger, en temps réel ou quasi-réel, des informations 5, 6, notamment des messages écrits 5 ou des messages audio 6, avec d'autres utilisateurs. Cet utilisateur 3, grâce à des touches de son téléphone mobile 1, actionne des moyens d'émission 1d de son téléphone mobile 1. Un signal d'identification 7 est alors émis vers un serveur 2, à partir dudit téléphone mobile 1.

Ce signal 7 comporte des informations 7a relatives à l'état de son téléphone mobile 1. Par état, on entend l'état "connecté", ou l'état "connecté et occupé", ou l'état "connecté et libre", ou l'état "connecté et caché", ou l'état "connecté et formulant une requête", ou l'état "déconnecté pour une durée limitée". Cet état est déterminé par le serveur 2, grâce à des moyens de calcul 2a, et/ou paramétré par l'utilisateur 3 de chaque téléphone mobile 1, grâce à des moyens de paramétrage 1c.

Le serveur 2, grâce à des moyens de calcul 2a et de mémorisation 2b, dresse périodiquement et mémorise la liste 8 des personnes ayant émis ledit signal d'identification 7 et désirant échanger des informations 5, 6.

L'utilisateur 3 visualise sur l'écran 1b de son téléphone mobile 1 ladite liste 8 ou une liste restreinte 9 de personnes sélectionnées parmi les personnes de ladite liste 8.

L'utilisateur peut également prendre connaissance de la liste 8 ou de la liste restreinte 9 de personnes sélectionnées parmi les personnes de ladite liste 8 grâce au haut-parleur la de son téléphone mobile 1.

L'utilisateur 3, grâce à des touches de son téléphone mobile 1, commande à son téléphone mobile 1 l'émission, vers le serveur 2, d'un signal de demande de téléchargement, de l'état des téléphones mobiles détenus par les personnes figurant sur ladite liste 8 ou sur ladite liste restreinte 9.

Le serveur 2, grâce à des moyens d'émission 2c, émet vers le téléphone mobile 1 de l'utilisateur 3 l'état des téléphones mobiles 1 détenus par les personnes figurant sur ladite liste 8 ou sur la liste restreinte 9.

Ainsi, l'utilisateur 3 du téléphone mobile 1 sait à tout moment quelles sont les personnes avec lesquelles il peut échanger des informations 5, 6.

L'utilisateur 3, grâce à des touches de son téléphone mobile 1, commande à son téléphone mobile 1 l'émission, vers le serveur 2, d'un signal de demande d'interconnexion, voix ou texte, avec tout ou partie des téléphones mobiles des personnes figurant sur ladite liste 8 ou sur la liste restreinte 9, en tenant compte de l'état de leur téléphone mobile.

Le serveur 2 peut également émettre, grâce à des moyens d'émission 2c, vers le téléphone mobile 1. de l'utilisateur 3 un signal de demande d'interconnexion, voix ou texte, avec un ou plusieurs des téléphones mobiles 1 des personnes figurant sur ladite liste 8 ou sur ladite liste restreinte 9, en tenant compte de l'état de leur téléphone mobile 1, notamment de l'état connecté et formulant une requête.

Ainsi, les personnes interconnectées peuvent échanger des informations 5, 6 en temps réel ou quasi-réel.

Pour établir ladite liste restreinte 9 des personnes sélectionnées, le serveur 2 transmet, grâce à des moyens de transmission 2d, au téléphone mobile 1 de l'utilisateur 3, soit directement soit sur requête du téléphone mobile 1 de l'utilisateur 3, ladite liste 8 sous une forme telle que l'utilisateur 3 puisse en prendre connaissance de manière auditive et/ou visuelle et puisse sélectionner sur ladite liste 8 une liste restreinte 9.

L'utilisateur 3 peut également établir ladite liste restreinte 9 par ses propres moyens, notamment à la faveur de contacts avec d'autres utilisateurs.

L'utilisateur 3 transmet au serveur 2 ladite liste restreinte 9 ou les modifications apportées à ladite liste restreinte 9, au moyen de son téléphone mobile 1.

Le serveur 2 transmet périodiquement au téléphone mobile 1 de l'utilisateur 3 ladite liste 8 ou la liste restreinte 9 mise à jour.

L'état "connecté et formulant une requête" comporte les requêtes suivantes :
- requête d'établissement automatique d'une interconnexion avec les téléphones mobiles ayant formulé la même requête,
- requête définissant des champs d'intérêts,
- requête de changement d'état.

On va maintenant décrire comment peuvent être recherchées les personnes situées à proximité les unes des autres.

De manière connue en soi, le réseau de communication 4 est décomposé en cellules 4a correspondant chacune à une aire géographique déterminée.

Les cellules 4a sont identifiées par un numéro de cellule.

Les numéros des cellules 4a où sont situés lesdits téléphones mobiles 1 sont transmis et répertoriés dans une zone mémoire 2e dudit serveur 2 et/ou dans une zone mémoire le desdits téléphones mobiles 1. Dans ce dernier cas, le numéro de cellule est émis vers ledit serveur 2, à partir de chaque téléphone mobile 1 détenu par une personne désirant échanger en temps réel des informations.

Le serveur 2, grâce à des moyens de calcul 2a, détermine, au moyen des numéros de cellule, les téléphones mobiles 1 situés dans la même cellule 4a ou dans des cellules 4a voisines.

Le serveur 2, grâce à des moyens de téléchargement 2f, télécharge ladite liste 8 ou ladite liste restreinte 9 dans le téléphone mobile 1 de l'utilisateur 3 en indiquant par une marque 10, audio ou visuelle, les personnes dont le téléphone mobile 1 est situé soit dans la même cellule 4a que celle où est situé le téléphone mobile 1 de l'utilisateur 3, soit dans des cellules 4a voisines de celle où est situé le téléphone mobile 1 de l'utilisateur 3.

Ainsi, l'utilisateur 3 détenant le téléphone mobile 1 connaît les personnes qui sont dans son aire géographique et peut les contacter afin de les rencontrer.

## Revendications

1. Procédé pour échanger, en temps réel ou quasi-réel, des informations, notamment des messages écrits (5) ou des messages audio (6), entre plusieurs membres d'une population de personnes disposant d'un téléphone mobile susceptible d'être connecté à un serveur (2) via un réseau de communication (4) :
ledit procédé comprenant l'étape d'émettre vers ledit serveur (2) un signal d'identifïcation (7), à partir de chaque téléphone mobile détenu par une personne désirant échanger en temps réel des informations ; ledit signal d'identification (7) comportant des informations (7a) concernant l'état du téléphone mobile considéré ; cet état étant :
• l'état "connecté", ou
• l'état "connecté et occupé", ou
• l'état "connecté et libre", ou
• l'état "connecté et caché", ou
• l'état "connecté et formulant une requête", ou
• l'état "déconnecté pour une durée limitée" ;
ledit état étant déterminé par le serveur (2) et/ou paramétré par l'utilisateur (3) de chaque téléphone mobile ;
ledit procédé comprenant en outre les étapes suivantes :
- l'étape de dresser périodiquement et de mémoriser dans ledit serveur (2) la liste (8) des personnes
• ayant émis, au moyen de leur téléphone mobile, ledit signal d'identification (7) et
• désirant échanger des informations,
- l'étape de télécharger ladite liste (8) ou une liste restreinte (9) de personnes sélectionnées parmi les personnes de ladite liste (8) dans un premier téléphone mobile (1),
- l'étape de visualiser sur un écran (1b) d'un premier téléphone mobile (1) et/ou d'émettre au moyen d'un haut-parleur (1a) d'un premier téléphone mobile (1) ladite liste (8) ou la liste restreinte (9),
- l'étape :
• soit d'émettre vers ledit serveur (2), à partir du premier téléphone mobile (1), un signal de demande de téléchargement, dans ledit premier téléphone mobile (1), de l'état des téléphones mobiles détenus par les personnes figurant sur ladite liste (8) ou sur la liste restreinte (9),
• soit d'émettre, à partir du serveur (2) vers le premier téléphone mobile (1), l'état des téléphones mobiles détenus par les personnes figurant sur ladite liste (8) ou sur la liste restreinte (9),
de sorte que l'utilisateur dudit premier téléphone mobile sait à tout moment quelles sont les personnes avec lesquelles il peut échanger des informations,
- l'étape :
• soit d'émettre vers ledit serveur (2), à partir dudit premier téléphone mobile (1), un signal de demande d'interconnexion, voix ou texte, avec tout ou partie des téléphones mobiles des personnes figurant sur ladite liste (8) ou sur la liste restreinte (9), en tenant compte de l'état de leur téléphone mobile,
• soit d'émettre vers ledit premier téléphone mobile (1), à partir du serveur (2) un signal de demande d'interconnexion, voix ou texte, avec un ou plusieurs des téléphones mobiles des personnes figurant sur ladite liste (8) ou sur la liste restreinte (9), en tenant compte de l'état de leur téléphone mobile, notamment de l'état connecté et formulant une requête,
de sorte que les personnes ainsi interconnectées peuvent échanger des informations en temps réel ou quasi-réel.

2. Procédé selon la revendication 1 tel que, pour établir ladite liste restreinte (9) des personnes sélectionnées :
• le serveur (2) transmet audit premier téléphone mobile (1), soit directement soit sur requête dudit premier téléphone mobile (1), ladite liste sous une forme telle que l'utilisateur (3) puisse en prendre connaissance de manière auditive et/ou visuelle et puisse sélectionner sur ladite liste (8) une liste restreinte (9), et/ou
• l'utilisateur (3) établit ladite liste restreinte (9) par ses propres moyens, notamment à la faveur de contacts avec d'autres membres.

3. Procédé selon la revendication 2, tel que l'utilisateur (3) transmet au serveur (2) ladite liste restreinte (9) ou les modifications apportées à ladite liste restreinte (9), au moyen dudit premier téléphone mobile (1).

4. Procédé selon l'une quelconque des revendications 2 ou 3, tel que le serveur (2) transmet périodiquement audit premier téléphone mobile (1) ladite liste (8) ou la liste restreinte (9) mise à jour.

5. Procédé selon l'une quelconque des revendications 1 à 4, tel que l'état "connecté et formulant une requête" comporte les requêtes suivantes :
• requête d'établissement automatique d'une interconnexion avec les téléphones mobiles ayant formulé la même requête,
• requête définissant des champs d'intérêts,
• requête de changement d'état.

6. Procédé selon l'une des revendications 1 à 5 comprenant l'étape de télécharger ladite liste (8) ou ladite liste restreinte (9) dans ledit premier téléphone mobile (1) en indiquant par une marque (10) audio ou visuelle les personnes dont le téléphone mobile est situé à proximité de ce premier téléphone mobile (1).

7. Procédé selon la revendication 6 dans lequel les personnes dont le téléphone mobile est situé à proximité dudit premier téléphone mobile (1) sont celles dont le téléphone mobile est situé
• dans la même cellule (4a) que celle où est situé ledit premier téléphone mobile (1), ou
• dans des cellules voisines de celle où est situé ledit premier téléphone mobile (1).

8. Procédé selon la revendication 7 dans lequel :
ledit réseau de communication (4) est décomposé en cellules (4a) correspondant chacune à une aire géographique déterminée ;
lesdites cellules (4a) sont identifiées par un numéro de cellule ;
les numéros des cellules (4a) où sont situés lesdits téléphones mobiles sont transmis et répertoriés dans une zone mémoire dudit serveur (2e) et/ou desdits téléphones mobiles (1e) ; ledit procédé comprend en outre, dans ce dernier cas, l'étape d'émettre ledit numéro de cellule vers ledit serveur (2), à partir de chaque téléphone mobile détenu par une personne désirant échanger en temps réel des informations,
ledit procédé comprenant en outre :
- l'étape de déterminer, au moyen desdits numéros de cellules, les téléphones mobiles situés dans la même cellule (4a) ou dans des cellules voisines.

9. Système pour échanger, en temps réel ou quasi-réel, des informations, notamment des messages écrits (5) ou des messages audio (6), entre plusieurs membres d'une population de personnes disposant d'un téléphone mobile susceptible d'être connecté à un serveur (2) via un réseau de communication (4) ;
ledit système comprenant des moyens de traitement pour produire un signal d`identification (7) ; ledit signal d'identification (7) comportant des informations (7a) concernant l'état du téléphone mobile considéré ; par état, on entend :
• l'état "connecté", ou
• l'état "connecté et occupé", ou
• l'état "connecté et libre", ou
• l'état "connecté et caché", ou
• l'état "connecté et formulant une requête", ou
• l'état "déconnecté pour une durée limitée" ;
ledit serveur (2) comprenant des moyens de calcul (2a) pour déterminer ledit état, et/ou ledit téléphone mobile comprenant des moyens de paramétrage (1c) pour paramétrer ledit état ; lesdits moyens de paramétrage (1c) étant actionnables par l'utilisateur (3) du téléphone mobile ;
ledit téléphone mobile comprenant des moyens d'émission (1d) pour émettre vers ledit serveur (2) tout ou partie dudit signal d'identification (7) ;
ledit serveur (2) comprenant en outre, d'une part,
des moyens de calcul (2a) et de mémorisation (2b) pour dresser périodiquement et pour mémoriser la liste (8) des personnes
• ayant émis, au moyen de leur téléphone mobile, tout ou partie dudit signal d'identification (7) et
• désirant échanger des informations, et
d'autre part, des moyens de téléchargement (2F) pour télécharger ladite liste ou une liste restreinte (9) de personnes sélectionnées parmi les personnes de ladite liste (8) ;
lesdits téléphones mobiles comprenant en outre :
- des moyens pour recevoir ladite liste (8) ou la liste restreinte (9),
- des moyens de visualisation (1b) pour visualiser sur un écran ladite liste (8) ou une liste restreinte (9) de personnes sélectionnées parmi les personnes de ladite liste (8), et/ou
- un haut-parleur (1a) pour émettre ladite liste (8) ou une liste restreinte (9) de personnes sélectionnées parmi les personnes de ladite liste (8) ;
ledit système étant tel que :
chaque téléphone mobile comprend en outre des moyens d'émission (1d) pour émettre vers ledit serveur (2) un signal de demande de téléchargement de l'état des téléphones mobiles détenus par les personnes figurant sur ladite liste (8) ou sur la liste restreinte (9), dans le téléphone mobile concerné,
ou ledit système étant tel que :
ledit serveur (2) comprend des moyens d'émission (2c) pour émettre vers le téléphone mobile concerné l'état des téléphones mobiles détenus par les personnes figurant sur ladite (8) liste ou sur la liste restreinte (9) ;
de sorte que l'utilisateur dudit téléphone mobile concerné sait à tout moment quelles sont les personnes avec lesquelles il peut échanger des informations,
ledit système étant tel que :
le téléphone mobile concerné comprend des moyens d'émission (1d) pour émettre vers ledit serveur (2) un signal de demande d'interconnexion, voix ou texte, avec tout ou partie des téléphones mobiles des personnes figurant sur ladite liste (8) ou sur la liste restreinte (9), en tenant compte de l'état de leur téléphone mobile,
ou ledit système étant tel que :
ledit serveur (2) comporte des moyens d'émission (2c) pour émettre vers chaque téléphone mobile un signal de demande d'interconnexion, voix ou texte, avec un ou plusieurs des téléphones mobiles des personnes figurant sur ladite liste (8) ou sur la liste restreinte (9), en tenant compte de l'état de leur téléphone mobile, notamment de l'état connecté et formulant une requête,
de sorte que les personnes ainsi interconnectées peuvent échanger des informations en temps réel ou quasi-réel.

10. Système selon la revendication 9, tel que, pour établir ladite liste restreinte (9) des personnes sélectionnées, le serveur (2) comporte des moyens de transmission (2d) pour transmettre au téléphone mobile concerné, soit directement soit sur requête dudit téléphone mobile concerné, ladite liste (8) sous une forme telle que l'utilisateur (3) puisse en prendre connaissance de manière auditive et/ou visuelle et puisse sélectionner sur ladite liste (8) une liste restreinte (9).

11. Système selon la revendication 10, tel que le téléphone mobile concerné comporte des moyens d'émission (1d) pour transmettre au serveur (2) ladite liste restreinte (9) ou les modifications apportées à ladite liste restreinte (9).

12. Système selon l'une quelconque des revendications 10 ou 11, tel que le serveur (2) transmet périodiquement au téléphone mobile concerné ladite liste (8) ou la liste restreinte (9) mise à jour.

13. Système selon l'une quelconque des revendications 9 à 12, tel que l'état "connecté et formulant une requête" comporte les requêtes suivantes :
• requête d'établissement automatique d'une interconnexion avec les téléphones mobiles ayant formulé la même requête,
• requête définissant des champs d'intérêts,
• requête de changement d'état.

14. Système selon l'une des revendications 9 à 13 dans lequel le serveur (2) comprend des moyens de téléchargement (2f) pour télécharger ladite liste (8) ou ladite liste restreinte (9) dans ledit téléphone mobile (1) en indiquant par une marque (10), audio ou visuelle, les personnes dont le téléphone mobile est situé à proximité de ce téléphone mobile (1).

15. Système selon la revendication 14 dans lequel les moyens de téléchargement pour télécharger ladite liste (8) ou ladite liste restreinte (9) dans le téléphone mobile concerné, en indiquant par une marque (10) les personnes dont le téléphone mobile est situé à proximité de ce premier téléphone mobile (1) sont tels que les téléphones mobiles situés à proximité sont ceux qui sont situés :
• dans la même cellule (4a) que celle où est situé le téléphone mobile concerné (1), ou
• dans des cellules voisines de celle où est situé le téléphone mobile concerné (1).

16. Système selon la revendication 15 dans lequel ledit réseau de communication (4) est décomposé en cellules (4a) correspondant chacune à une aire géographique déterminée ;
lesdites cellules (4a) sont identifiées par un numéro de cellule ;
les numéros des cellules (4a) où sont situés lesdits téléphones mobiles sont transmis et répertoriés dans une zone mémoire dudit serveur (2e) et/ou desdits téléphones mobiles (1e) ;
ledit téléphone mobile, détenu par une personne désirant échanger en temps réel des informations, étant tel qu'il comprend en outre, dans le cas où il comporte une zone mémoire (1e) destinée à répertorier le numéro de la cellule où il se situe, des moyens d'émission (1d) pour émettre ledit numéro de cellule vers ledit serveur (2) ;
ledit serveur (2) comprenant en outre des moyens de calcul (2a) pour déterminer, au moyen desdits numéros de cellules, les téléphones mobiles situés dans la même cellule (4a) ou dans des cellules (4a) voisines.

17. Serveur (2) permettant à plusieurs membres d'une population de personnes d'échanger, en temps réel ou quasi-réel, des informations, notamment des messages écrits (5) ou des messages audio (6) ; lesdites personnes disposant de téléphones mobiles susceptibles d'être connectés audit serveur (2) via un réseau de communication (4) ;
ledit serveur (2) comprenant des moyens de calcul (2a) pour déterminer l'état du téléphone mobile considéré ; par état, on entend :
• l'état "connecté", ou
• l'état "connecté et occupé", ou
• l'état "connecté et libre", ou
• l'état "connecté et caché", ou
• l'état "connecté et formulant une requête", ou
• l'état "déconnecté pour une durée limitée" ;
ledit serveur (2) comprenant en outre des moyens de calcul (2a) et de mémorisation (2b) pour dresser périodiquement et pour mémoriser la liste (8) des personnes désirant échanger des informations ; lesdites personnes ayant émis, au moyen de leur téléphone mobile, tout ou partie d'un signal d'identification (7) ; ledit signal d'identification (7) comportant des informations (7a) concernant l'état du téléphone mobile considéré ;
le serveur comprenant des moyens de téléchargement (2F) pour télécharger ladite liste (8) et la liste restreinte (9) de personnes sélectionnées parmi les personnes de ladite liste (8),
ledit serveur (2) comprenant en outre des moyens d'émission (2c) pour émettre vers le téléphone mobile concerné l'état des téléphones mobiles détenus par les personnes figurant sur ladite liste (8) ou sur la liste restreinte (9) ;
de sorte que l'utilisateur dudit téléphone mobile concerné sait à tout moment quelles sont les personnes avec lesquelles il peut échanger des informations,
ledit serveur (2) comprenant en outre des moyens d'émission (2c) pour émettre vers chaque téléphone mobile un signal de demande d'interconnexion, voix ou texte, avec un ou plusieurs des téléphones mobiles des personnes figurant sur ladite liste (8) ou sur la liste restreinte (9), en tenant compte de l'état de leur téléphone mobile, notamment de l'état connecté et formulant une requête,
de sorte que les personnes ainsi interconnectées peuvent échanger des informations en temps réel ou quasi-réel,

18. Serveur (2) selon la revendication 17 comportant des moyens de transmission (2d) pour transmettre au téléphone mobile concerné, soit directement soit sur requête dudit téléphone mobile concerné, ladite liste (8) sous une forme telle que l'utilisateur (3) puisse en prendre connaissance de manière auditive et/ou visuelle et puisse sélectionner sur ladite liste (8) une liste restreinte (9).

19. Serveur (2) selon la revendication 18, comportant des moyens de transmission (2d) pour transmettre périodiquement au téléphone mobile concerné ladite liste (8) ou la liste restreinte (9) mise à jour.

20. Serveur (2) selon l'une quelconque des revendications 17 à 19, tel que l'état "connecté et formulant une requête" comporte les requêtes suivantes :
• requête d'établissement automatique d'une interconnexion avec les téléphones mobiles ayant formulé la même requête,
• requête définissant des champs d'intérêts,
• requête de changement d'état.

21. Serveur (2) selon l'une quelconque des revendications 17 à 20 comprenant des moyens de téléchargement (2f) pour télécharger ladite liste (8) ou ladite liste restreinte (9) dans ledit premier téléphone mobile (1) en indiquant par une marque (10), audio ou visuelle, les personnes dont le téléphone mobile est situé à proximité de ce premier téléphone mobile (1).

22. Serveur selon la revendication 21 dans lequel les moyens de téléchargement (2f) pour télécharger ladite liste (8) ou ladite liste restreinte (9) dans le premier téléphone mobile (1), en indiquant par une marque (10) les personnes dont le téléphone mobile est situé à proximité de ce premier téléphone mobile (1), sont tels que les personnes situées à proximité du premier téléphone sont celles dont le téléphone mobile est situé :
• dans la même cellule (4a) que celle où est situé le téléphone mobile concerné, ou
• dans des cellules voisines de celle où est situé le téléphone mobile concerné.

23. Serveur selon la revendication 22 dans lequel :
ledit réseau de communication (4) étant décomposé en cellules (4a) correspondant chacune à une aire géographique déterminée ;
lesdites cellules (4a) étant identifiées par un numéro de cellule ;
les numéros des cellules (4a) où sont situés lesdits téléphones mobiles sont transmis et répertoriés dans une zone mémoire dudit serveur (2e) et/ou desdits téléphones mobiles (1e) ;
ledit serveur (2) comporte une zone mémoire (2e) dans laquelle sont répertoriés les numéros des cellules (4a) où sont situés lesdits téléphones mobiles ;
ledit serveur (2) comprenant en outre des moyens de calcul (2a) pour déterminer, au moyen desdits numéros de cellules, les téléphones mobiles situés dans la même cellule (4a)
ou dans des cellules voisines.

## Claims

1. Method for exchanging, in real time or quasi real time, information, in particular written messages (5) or audio messages (6), between several members of a population of people using mobile telephones, capable of being connected to a server (2) via a communication network (4);
the said method comprising the step of transmitting an identification signal (7) to the aforementioned server (2), from each mobile telephone used by a person wishing to exchange information in real time; the said identification signal (7) containing information (7a) regarding the status of the mobile telephone in question; this status being:
• "connected" status, or
• "connected and busy" status, or
• "connected and free" status, or
• "connected and hidden" status, or
• "connected and making a request" status, or
• "disconnected for a limited period" status;
the said status being determined by the server (2) and/or parameterised by the user (3) of each mobile telephone;
the said method also comprising the following steps:
- the step of periodically drawing up and memorising in the aforementioned server (2) the list (8) of people
• who have sent the aforementioned identification signal (7), using their mobile telephone and
• who wish to exchange information,
- the step of downloading said list (8) or a restricted list (9) of selected persons among the persons of said list (8) in a first mobile telephone (1)
- the step of viewing on the screen (1b) of a first mobile telephone (1) and/or transmitting from a first mobile telephone (1) using a speaker (1a) the said list (8), or the restricted list (9),
- the step:
• either of transmitting to the aforementioned server (2) from the first mobile telephone (1) a download request signal to download to the said mobile telephone (1) the status of the mobile telephones used by the people appearing on the said list (8) or on the restricted list (9),
• or transmitting, from the server (2) to the first mobile telephone (1), the status of the mobile telephones used by the people appearing on the said list (8) or on the restricted list (9),
in such a way that the user of the said first mobile telephone can identify at any time the people with whom he can exchange information,
- the step:
• either of transmitting to the said server (2), from the said first mobile telephone (1), a voice or text interconnection request, with all or some of the mobile telephones used by the people appearing on the said list (8) or the restricted list (9), taking account of the status of their mobile telephones,
• or transmitting to the said first mobile telephone (1), from the server (2), a voice or text interconnection request, with one or more mobile telephones used by the people appearing on the said list (8) or the restricted list (9), taking account of the status of their mobile telephone, in particular the connected and making a request status,
in such a way that the people interconnected in this manner can exchange information in real time or quasi real time.

2. Method according to claim 1, where to establish the said restricted list (9) of selected people:
• the server (2) transmits to the said first mobile telephone (1), either directly or on the request of the said first mobile telephone (1), the said list in such a form that the user (3) can familiarise himself with it in an audio and/or visual manner and can select from the said list (8) a restricted list (9), and/or
• the user (3) establishes the said restricted list (9) by himself, in particular when contacting other members.

3. Method according to claim 2 where the user (3) transmits to the server (2) the said restricted list (9) or changes made to the said restricted list (9), using the said first mobile telephone (1).

4. Method according to any of the claims 2 or 3, where the server (2) periodically transmits to the said first mobile telephone (1), the said list (8) or the updated restricted list (9).

5. Method according to any of the claims 1 to 4, where the "connected and making a request status" comprises the following requests:
• request to automatically establish an interconnection with mobile telephones, which have made the same request,
• request defining the areas of interest,
• request to change status.

6. Method according to any of the claims 1 to 5 comprising the step of downloading the said list (8) or the said restricted list (9) to the said first mobile telephone (1), indicating with an audio or visual symbol (10), the people whose mobile telephones are located in close proximity of this first mobile telephone (1).

7. Method according to claim 6 wherein the people whose mobile telephones are located in close proximity to said first mobile telephone are those whose mobile telephone is located:
• in the same cell (4a) as the one in which the said first mobile telephone (1) is located, or
• in cells (4a) adjoining the one in which the said first mobile telephone (1) is located,

8. Method according to claim 7 wherein:
the said communication network (4) is subdivided into cells (4a), each one corresponding to a certain geographic area;
the said cells (4a) are identified by a cell number;
the cell numbers (4a), where the said mobile telephones are situated, are transmitted and stored in a memory zone (2e) of the said server or of the said mobile telephones (1e); the said method also comprising, in the above case, the step of transmitting the said cell number to the said server (2), from each mobile telephone used by a person wishing to exchange information in real time;
the said method also comprising:
- the step of determining, using the said cell numbers, which mobile telephones are located in the same cell (4a) or in neighbouring cells (4a).

9. System for exchanging information, in real time or quasi real time, in particular written messages (5) or audio messages (6), between several members of a population of people using a mobile telephone, capable of being connected to a server (2) via a communication network (4);
the said system comprising processing means to generate an identification signal (7); the said identification signal (7) containing information (7a) relating to the status of the mobile telephone in question; status means:
• "connected" status, or
• "connected and busy" status, or
• "connected and free" status, or
• "connected and hidden" status, or
• "connected and making a request" status, or
• "disconnected for a limited period" status;
the said server (2) comprising calculation means (2a) to determine the said status, and/or the said mobile telephone comprising parameterisation means (1c) to parameterise the said status; the said parameterisation means (1c) being operated by the user (3) of the mobile telephone;
the said mobile telephone comprising transmission means (1d) to transmit to the said server (2) all or part of the said identification signal (7);
the said server (2) also comprising, on the one hand:
calculation means (2a) and, on the other hand, memorisation means (2b) to periodically draw up and memorise the list (8) of people
• who have transmitted all or part of the said identification signal (7), using their mobile telephone and
• who wish to exchange information; and
on the other hand:
downloading means (2F) for downloading said list (8) or a restricted list (9) of people selected among the people of said list (8);
the said mobile telephones also comprising:
- means for receiving said list (8) or the restricted list (9),
- means to view (1b) on their screens the said list (8), or a restricted list (9) of selected people from those on the said list (8), and/or
- a speaker (1a) to transmit the said list (8), or a restricted list (9) of selected people from those on the said list (8);
the said system being such that:
each mobile telephone also comprises transmission means (1d) to transmit to the said server (2) a download signal request for the status of mobile telephones used by people appearing on the said list (8), or the restricted list (9), to the mobile telephone in question,
or the said system being such that:
the said server (2) comprises transmission means (2c) to transmit to the mobile telephone in question, the status of the mobile telephones used by people appearing on the said list (8), or the restricted list (9) ;
in such a way that the user of the aforementioned mobile telephone can identify at any time the people with whom he can exchange information,
the said system being such that:
the mobile telephone in question comprises transmission means (1d) to transmit to the said server (2) a voice or text interconnection request signal, with all or some of the mobile telephones used by the people appearing on the said list (8) or on the restricted list (9), taking into account the status of their mobile telephone,
or the said system being such that:
the said server (2) comprises transmission means (2c) to transmit to each mobile telephone a voice or text interconnection request with one or more of the mobile telephones used by the people appearing on the aforementioned list (8) or on the restricted list (9), taking into account the status of their mobile telephone, in particular with a connected and making a request status,
in such a way that people interconnected in this manner can exchange information in real time or quasi real time.

10. Method according to claim 9, where to establish the said restricted list (9) of selected people, the server (2) comprises transmission means (2d) to transmit to the mobile telephone in question, either directly or on a request from the said mobile telephone in question, the said list (8) in such a form that the user (3) can familiarise himself with it in an audio and/or visual manner and can select from the said list (8) a restricted list (9).

11. Method according to claim 10, where the mobile telephone in question comprises transmission means (1d) to transmit to the server (2) the said restricted list (9) or changes made to the said restricted list (9).

12. System according to any of the claims 10 or 11, where the server (2) periodically transmits to the mobile telephone in question the said list (8) or the updated restricted list (9).

13. System according to any of the claims 9 to 12, where the "connected and making a request" status comprises the following requests:
• request to automatically establish an interconnection with mobile telephones which have made the same request,
• request defining areas of interest,
• request to change status.

14. System according to any of the claims 9 to 13, wherein the said server (2) also comprises downloading means (2f) to download the said list (8) or the said restricted list (9) to the mobile telephone in question by marking with an audio or visual symbol (10) the people whose mobile telephones are located in close proximity of this mobile telephone (1).

15. System according to claim 14 wherein the said downloading means for downloading said list (8) or said restricted list (9) in the mobile telephone in question, by marking with an audio or visual symbol
(10) the people whose mobile telephones are located in close proximity of this first mobile telephone (1), are such that the mobile telephones located in close proximity are those located:
• in the same cell (4a) as the one in which the mobile telephone in question is located, or
• in cells (4a) adjoining the one in which the mobile telephone in question is located.

16. System according to claim 15, wherein
the said communication network (4) is subdivided into cells (4a), each one corresponding to a certain geographic area;
the said cells (4a) are identified by a cell number;
the number of cells (4a) where said mobile telephones are located are transmitted and memorized in a memory zone of said server (2e) and/or of said mobile telephones (1e);
the said mobile telephone, held by a person wishing to exchange information in real time, being such that is also comprises, in case it comprises a memory zone (1e) designed to store the cell number where it is located, transmission means (1d) to transmit the said cell number to the said server (2),
the said server (2) also comprises calculation means (2a) to determine, using the said cell numbers, which mobile telephones are located in the same cell (a) or in neighbouring cells (4a).

17. Server (2) permitting to several members of a population of people to exchange information, in real time or quasi real time, in particular written messages (5) or audio messages (6); the said people using mobile telephones capable of being connected to the said server (2) via a communication network (4);
the said server (2) comprising calculation means (2a) to determine the status of the mobile telephone in question; status means:
• "connected" status, or
• "connected and busy" status, or
• "connected and free" status, or
• "connected and hidden" status, or
• "connected and making a request" status, or
• "disconnected for a limited period" status;
the said server (2) also comprising calculation means (2a) and memorisation means (2b) to periodically draw up and memorise the list (8) of people wishing to exchange information; the said people having transmitted all or part of an identification signal (7), using their mobile telephone; the said identification signal (7) containing information (7a) relating to the status of the mobile telephone in question;
the server comprising uploading means (2F) to upload said list (8) and the restricted list (9) of people selected among the people of said list (8);
the said server (2) also comprising transmission means (2c) to transmit to the mobile telephone in question the status of the mobile telephones used by the people appearing on the said list (8) or on the restricted list (9);
in such a way that the user of the aforementioned mobile telephone can identify at any time the people with whom he can exchange information,
the said server (2) also comprising transmission means (2a) to transmit to each mobile telephone a voice or text interconnection request with one or more of the mobile telephones used by people appearing on the said list (8) or on the restricted list (9), taking into account the status of their mobile telephones, in particular the connected and making a request status,
such that people interconnected in this manner can exchange information in real time or quasi real time.

18. Server (2) according to claim 17 comprising transmission means (2d) to transmit to the mobile telephone in question, either directly or on the request of the said mobile telephone, the said list (8) in such a form that the user (3) can familiarise himself with it in an audio and/or visual manner and can select from the said list (8) a restricted list (9).

19. Server (2) according to claim 18 comprising transmission means (2d) to periodically transmit to the mobile telephone in question, the said list (8) or the updated restricted list (9).

20. Server (2) according to any of the claims 17 to 19 where the "connected and making a request" status comprises the following requests:
- request to automatically establish an interconnection with mobile telephones, which have made the same request,
- request defining the areas of interest
- request to change status.

21. Server (2) according to any of the claims 17 to 20, comprising uploading means (2f) to upload the said list (8) or the said restricted list (9) to said first mobile telephone by marking with an audio or visual symbol (10), the people whose mobile telephones are located in close proximity of this first mobile telephone (1) .

22. Server according to claim 21 wherein the uploading means (2f) for uploading said list (8) or said restricted list (9) in the first mobile telephone (1), by marking with an audio or visual symbol (10), the people whose mobile telephones are located in close proximity of this first mobile telephone (1), are such that the people located in the proximity of the first telephone are those whose mobile telephone is located:
• in the same cell (4a) as the one in which the mobile telephone in question is located, or
• in cells (4a) adjoining the one in which the mobile telephone in question is located.

23. Server according to claim 22 wherein:
the said communication network (4) is subdivided into cells (4a), each one corresponding to a certain geographic area;
the said cells (4a) being identified by a cell number;
the numbers of the cells (4a), where the said mobile telephones are located, are transmitted and memorized in a memory zone of said server (2e) and/or of said mobile telephones (1e);
the said server (2) comprising a memory zone (2e) in which are stored the numbers of the cells (4a) where said mobile telephones are located;
the said server (2) also comprising calculation means (2a) to determine, using the aforementioned cell numbers, which mobile telephones are located in the same cell (4a) or in neighbouring (4a) cells.

## Patentansprüche

1. Verfahren zum Austausch von Informationen - nämlich schriftliche Meldungen (5) oder Audiomeldungen (6) - zwischen mehreren Mitgliedern einer Personenbevölkerung in realer oder quasirealer Zeit, welche über ein durch ein Kommunikationsnetz (4) an einen Server (2) anschaltbares Mobiltelefon verfügen, wobei:
- das besagte Verfahren den Schritt umfaßt, ein Identifikationssignal (7) zum besagten Server (2) von jedem Mobiltelefon aus zu senden, das sich im Besitz einer Person befindet, die Informationen in realer Zeit auszutauschen wünscht; und
- das besagte Identifikationssignal (7) Informationen (7a) über den Zustand des betrachteten Mobiltelefons beinhaltet, der:
• der "angeschaltete" Zustand oder
• der "angeschaltete und besetzte" Zustand oder
• der "angeschaltete und freie" Zustand oder
• der "angeschaltete und versteckte" Zustand oder
• der "angeschaltete und eine Anfrage formulierende" Zustand oder
• der "für eine begrenzte Dauer abgeschaltete" Zustand ist; wobei der besagte Zustand durch den Server (2) bestimmt und/oder durch den Benutzer (3) jedes Mobiltelefons parametriert wird;
- das besagte Verfahren zusätzlich die folgenden Schritten umfaßt:
⇒ die periodische Erstellung und die Abspeicherung im besagten Server (2) der Liste (8) der Personen, die:
• das besagte Identifikationssignal (7) mittels ihres Mobiltelefons gesendet haben; und
• Informationen austauschen möchten;
⇒ das Downloaden der besagten Liste (8) oder einer beschränkten Liste (9) von unter den Personen der besagten Liste (8) ausgewählten Personen in ein erstes Mobiltelefon (1);
⇒ die Visualisierung auf ein Display (1b) eines ersten Mobiltelefons (1) und/oder das Senden der besagten Liste (8) oder der beschränkten Liste (9) mittels eines Lautsprechers (1a) eines ersten Mobiltelefons (1);
⇒ den Schritt
• entweder ein Download-Anfragesignal über den Zustand der sich im Besitz der in der besagten Liste (8) oder in der beschränkten Liste (9) enthaltenen Personen befindlichen Mobiltelefone zum besagten Server (2) vom ersten Mobiltelefon aus in das besagte erste Mobiltelefon (1) zu senden;
• oder den Zustand der sich im Besitz der in der besagten Liste (8) oder in der beschränkten Liste (9) enthaltenen Personen befindlichen Mobiltelefone vom Server (2) aus zum ersten Mobiltelefon (1) zu senden, so daß der Benutzer des besagten ersten Mobiltelefons jederzeit weiß, mit welchen Personen er Informationen austauschen kann;
⇒ den Schritt
• entweder ein Vernetzungs-Anfragesignal - Sprache oder Text - mit allen oder mit einem Teil der in der besagten Liste (8) oder in der beschränkten Liste (9) enthaltenen Personen befindlichen Mobiltelefone zum besagten Server (2) vom besagten ersten Mobiltelefon (1) unter Berücksichtigung des Zustands deren Mobiltelefone zu senden;
• oder ein Vernetzungs-Anfragesignal - Sprache oder Text - mit einem oder mehreren der Mobiltelefone der in der besagten Liste (8) oder in der beschränkten Liste (9) enthaltenen Personen unter Berücksichtigung des Zustands deren Mobiltelefone - nämlich des angeschalteten und eine Anfrage formulierenden Zustands - vom Server (2) aus zu senden,
so daß die so vernetzten Personen Informationen in realer oder quasirealer Zeit austauschen können.

2. Verfahren nach Anspruch 1, so daß für die Erstellung der besagten beschränkten Liste (9) der ausgewählten Personen:
• der Server (2) die besagte Liste entweder direkt oder auf Anfrage des ersten Mobiltelefons (1) dem ersten Mobiltelefon (1) überträgt, unter solch einer Form, daß der Benutzer auf auditiver und/oder visueller Art davon Kenntnis nehmen und eine beschränkte Liste (9) aus der besagten Liste (8) auswählen kann; und/oder
• der Benutzer (3) die besagte beschränkte Liste (9) durch seine Eigenmittel nämlich begünstigt durch Kontakte mit anderen Personen erstellt.

3. Verfahren nach Anspruch 2, so daß der Benutzer (3) die besagte beschränkte Liste (9) oder die in der besagten beschränkten Liste (9) eingetragenen Änderungen mittels des besagten ersten Mobiltelefons (1) dem Server (2) überträgt.

4. Verfahren nach irgendeinem der Ansprüche 2 oder 3, so daß der Server (2) die besagte Liste (8) oder die aktualisierte beschränkte Liste (9) dem besagten ersten Mobiltelefon (1) periodisch überträgt.

5. Verfahren nach irgendeinem der Ansprüche 1 bis 4, so daß der "angeschaltete und eine Anfrage formulierende" Zustand folgende Anfragen umfaßt:
• Anfrage des automatischen Aufbaus einer Vernetzung mit den Mobiltelefonen, die die gleiche Anfrage formuliert haben;
• Interessenfelder definierende Anfrage; und
• Anfrage der Zustandsänderung.

6. Verfahren nach einem der Ansprüche 1 bis 5, das den Schritt umfaßt, die besagte Liste (8) oder die besagte beschränkte Liste (9) in das besagte erste Mobiltelefon (1) mit Anzeige der Personen, deren Mobiltelefone sich in der Nähe dieses ersten Mobiltelefons (1) befinden, durch eine Audio- oder visuelle Markierung zu downloaden.

7. Verfahren nach Anspruch 6, wobei die Personen, deren Mobiltelefone sich in der Nähe dieses besagten ersten Mobiltelefons (1) befinden, diejenigen sind, deren Mobiltelefone sich:
• in der gleichen Zelle (4a) wie das besagte erste Mobiltelefon (1) befinden; oder
• in Nachbar-Zellen von der Zelle befinden, wo das besagte erste Mobiltelefon (1) platziert ist.

8. Verfahren nach Anspruch 7, wobei:
- das besagte Kommunikationsnetz (4) in Zellen (4a) unterteilt ist, wobei jede Zelle einer bestimmten geographischen Fläche entspricht;
- die besagten Zellen (4a) durch eine Zellennummer identifiziert werden;
- die Nummern der Zellen (4a), wo sich die besagten Mobiltelefone befinden, in eine Speicherzone des besagten Servers (2e) und/oder der besagten Mobiltelefone (1e) übertragen und registriert werden; zusätzlich umfaßt das besagte Verfahren in diesem letzten Fall, den Schritt die besagte Zellennummer zum besagten Server (2) von jedem sich im Besitz einer Person befindlichen Mobiltelefon aus zu senden, die Informationen in realer Zeit austauschen will;
- das besagte Verfahren zusätzlich den Schritt umfaßt, die Mobiltelefone, die sich in der gleichen Zelle (4a) oder in benachbarten Zellen befinden, mittels der besagten Zellennummer zu bestimmen.

9. System zum Austausch von Informationen - nämlich schriftliche Meldungen (5) oder Audiomeldungen (6) -zwischen mehreren Mitgliedern einer Personenbevölkerung in realer oder quasirealer Zeit, welche über ein durch ein Kommunikationsnetz (4) an einen Server (2) anschaltbares Mobiltelefon verfügen, wobei:
- das besagte System Verarbeitungsmittel für das Erzeugen eines Identifikationssignals (7) umfaßt; das besagte Identifikationssignal (7) Informationen (7a) über den Zustand des betrachteten Mobiltelefons beinhaltet; unter "Zustand" versteht man:
• den "angeschalteten" Zustand oder
• den "angeschalteten und besetzten" Zustand oder
• den "angeschalteten und freien" Zustand oder
• den "angeschalteten und versteckten" Zustand oder
• den "angeschalteten und eine Anfrage formulierenden" Zustand oder
• den "für eine begrenzte Dauer abgeschalteten" Zustand;
wobei der besagte Server (2) Rechenmittel (2a) zur Bestimmung des besagten Zustands aufweist und/oder das besagte Mobiltelefon Parametriermittel (1c) zur Parametrierung des besagten Zustands umfaßt, wobei die Parametriermittel (1c) durch den Benutzer (3) des Mobiltelefons betätigt werden können;
- das besagte Mobiltelefon Sendemittel (1d) für das vollständige oder teilweise Aussenden des besagten Identifikationssignals (7) zum besagten Server (2) umfaßt;
- der besagte Server (2) zusätzlich folgendes aufweist:
• einerseits Rechen- (2a) und Abspeicherungsmittel (2b) zur periodischen Erstellung und zur Abspeicherung der Liste (8) von Personen, die
- das besagte Identifikationssignal (7) vollständig oder teilweise gesendet haben; und
- Informationen austauschen wollen; und
• andererseits Downloadmittel (2F) für das Downloaden der besagten Liste oder einer beschränkten Liste (9) von unter den Personen der besagten Liste (8) ausgewählten Personen;
- die besagten Mobiltelefone zusätzlich folgendes aufweisen:
• Mittel zum Empfang der besagten Liste (8) oder der beschränkten Liste (9);
• Visualisierungsmittel (1b) zur Visualisierung der besagten Liste (8) oder einer beschränkten Liste (9) von unter den Personen der besagten Liste (8) ausgewählten Personen auf einem Display; und
• ein Lautsprecher (1a) für das Aussenden der besagten Liste (8) oder einer beschränkten Liste (9) von unter den Personen der besagten Liste (8) ausgewählten Personen;
- das besagte System so ausgelegt ist, daß jedes Mobiltelefon zusätzlich Sendemittel (1d) aufweist, um ein Download-Anfragesignal über den Zustand der sich im Besitz der in der besagten Liste (8) oder in der beschränkten Liste (9) enthaltenen Personen befindlichen Mobiltelefone in das betroffene Mobiltelefon zum besagten Server (2) zu senden;
- oder das besagte System so ausgelegt ist, daß der besagte Server (2) Sendemittel (2c) aufweist, um den Zustand der sich im Besitz der in der besagten Liste (8) oder in der beschränkten Liste (9) enthaltenen Personen befindlichen Mobiltelefone zum betroffenen Mobiltelefon zu senden, so daß der Benutzer des besagten betroffenen Mobiltelefons jederzeit weiß, mit welchen Personen et Informationen austauschen kann,
- das besagte System so ausgelegt ist, daß das betroffene Mobiltelefon Sendemittel (1d) aufweist, um ein Vernetzungs-Anfragesignal - Sprache oder Text - mit allen oder mit einem Teil der Mobiltelefone der in der besagten Liste (8) oder in der beschränkten Liste (9) enthaltenen Personen zum besagten Server (2) unter Berücksichtigung des Zustands deren Mobiltelefone zu senden;
- oder das besagte System so ausgelegt ist, daß der besagte Server (2) Sendemittel (2c) aufweist, um ein Vernetzungs-Anfragesignal - Sprache oder Text - mit einem oder mehreren der Mobiltelefone der in der besagten Liste (8) oder in der beschränkten Liste (9) enthaltenen Personen unter Berücksichtigung des Zustands deren Mobiltelefone - nämlich des angeschalteten und eine Anfrage formulierenden Zustands - zu jedem Mobiltelefon zu senden, so daß die so vernetzten Personen Informationen in realer oder quasirealer Zeit austauschen können.

10. System nach Anspruch 9, so daß für die Erstellung der besagten beschränkten Liste (9) der ausgewählten Personen der Server (2) Übertragungsmittel (2d) aufweist, um die besagte Liste (8) entweder direkt oder auf Anfrage des betroffenen Mobiltelefons dem betroffenen Mobiltelefon zu übertragen, unter solch einer Form, daß der Benutzer (3) auf auditiver oder visueller Art davon Kenntnis nehmen und eine beschränkte Liste (9) aus der besagten Liste (8) auswählen kann.

11. System nach Anspruch 10, so daß das betroffene Mobiltelefon Sendemittel (1d) aufweist, um die besagte beschränkte Liste (9) oder die in der besagten beschränkten Liste (9) eingetragenen Änderungen dem Server (2) zu übertragen.

12. System nach irgendeinem der Ansprüche 10 oder 11, so daß der Server (2) die besagte Liste (8) oder die aktualisierte beschränkte Liste (9) dem betroffenen Mobiltelefon periodisch überträgt.

13. System nach irgendeinem der Ansprüche 9 bis 12, so daß der "angeschaltete und eine Anfrage formulierende" Zustand folgende Anfragen umfaßt:
• Anfrage des automatischen Aufbaus einer Vernetzung mit den Mobiltelefonen, die die gleiche Anfrage formuliert haben;
• Interessenfelder definierende Anfrage; und
• Anfrage der Zustandsänderung.

14. System nach einem der Ansprüche 9 bis 13, wobei der Server (2) Download-Mittel (2f) aufweist, um die besagte Liste (8) oder die besagte beschränkte Liste (9) in das besagte Mobiltelefon (1) mit Anzeige der Personen, deren Mobiltelefone sich in der Nähe dieses ersten Mobiltelefons (1) befinden, durch eine Audio- oder visuelle Markierung (10) zu downloaden.

15. System nach Anspruch 14, wobei die Download-Mittel für das Downloaden der besagten Liste (8) oder der besagten beschränkten Liste (9) in das betroffene Mobiltelefon mit Anzeige der Personen, deren Mobiltelefone sich in der Nähe dieses ersten Mobiltelefons (1) befinden, durch eine Audio- oder visuelle Markierung so ausgelegt sind, daß die sich in der Nähe befindlichen Mobiltelefone diejenigen sind, die sich:
• in der gleichen Zelle (4a) wie das betroffene Mobiltelefon befinden; oder
• in Nachbar-Zellen von der Zelle befinden, wo das betroffene Mobiltelefon platziert ist.

16. System nach Anspruch 15, wobei:
- das besagte Kommunikationsnetz (4) in Zellen (4a) unterteilt ist, wobei jede Zelle einer bestimmten geographischen Fläche entspricht;
- die besagten Zellen (4a) durch eine Zellennummer identifiziert werden;
- die Nummern der Zellen (4a), wo sich die besagten Mobiltelefone befinden, in eine Speicherzone des besagten Servers (2e) und/oder der besagten Mobiltelefone (1e) übertragen und registriert werden;
- das besagte Mobiltelefon, das sich im Besitz einer Person befindet, die Informationen in realer Zeit austauchen will, so ausgelegt ist, daß es für den Fall, daß es eine Speicherzone (1a) für die Registrierung der Nummer der Zelle, wo es sich befindet, umfaßt, Sendmittel (1d) für das Aussenden der besagten Zellennummer zum besagten Server (2) aufweist; und
- der besagte Server (2) zusätzlich Rechenmittel (2a) zur Bestimmung der sich in der gleichen Zelle (4a) oder in benachbarten Zellen (4a) befindlichen Mobiltelefone mittels der besagten Zellennummern aufweist.

17. Server (2), mittels dessen mehrere Mitglieder eine Personenbevölkerung Informationen - nämlich schriftliche Meldungen (5) oder Audiomeldungen (6) - in realer oder quasirealer Zeit austauschen können, wobei:
- die besagten Personen über durch ein Kommunikationsnetz (4) an den besagten Server (2) anschaltbare Mobiltelefone verfügen;
- der besagte Server (2) Rechenmittel (2a) zur Bestimmung des Zustands des betrachteten Mobiltelefons aufweist; unter "Zustand" versteht man:
• den "angeschalteten" Zustand oder
• den "angeschalteten und besetzten" Zustand oder
• den "angeschalteten und freien" Zustand oder
• den "angeschalteten und versteckten" Zustand oder
• den "angeschalteten und eine Anfrage formulierenden" Zustand oder
• den "für eine begrenzte Dauer abgeschalteten" Zustand; wobei:
⇒ der besagte Server (2) zusätzlich Rechen- (2a) und Abspeicherungsmittel (2b) zur periodischen Erstellung und zur Abspeicherung der Liste (8) der Personen umfaßt, welche Informationen austauschen wollen;
⇒ die besagten Personen das Identifikationssignal (7) mit Hilfe derer Mobiltelefone vollständig oder teilweise ausgesendet haben; und
⇒ das besagte Identifikationssignal (7) Informationen (7a) über den Zustand des betrachteten Mobiltelefons enthält;
- der Server Downloadmittel (2F) für das Downloaden der besagten Liste (8) und der beschränkten Liste (9) von unter den Personen der besagten Liste (8) ausgewählten Personen aufweist;
- der besagte Server (2) zusätzlich Sendemittel (2c) aufweist, um den Zustand der sich im Besitz der in der besagten Liste (8) oder in der beschränkten Liste (9) enthaltenen Personen befindlichen Mobiltelefone zum betroffenen Mobiltelefon zu senden,
so daß der Benutzer des besagten betroffenen Mobiltelefons jederzeit weiß, mit welchen Personen er Informationen austauschen kann;
- der besagte Server (2) zusätzlich Sendemittel (2c) aufweist, um ein Vernetzungs-Anfragesignal - Sprache oder Text - mit einem oder mehreren der Mobiltelefone der in der besagten Liste (8) oder in der beschränkten Liste (9) enthaltenen Personen unter Berücksichtigung des Zustands deren Mobiltelefone - nämlich des angeschalteten und eine Anfrage formulierenden Zustands - zu jedem Mobiltelefon zu senden,
so daß die so vernetzten Personen Informationen in realer oder quasirealer Zeit austauschen können.

18. Server (2) nach Anspruch 17 mit Übertragungsmitteln (2d), um die besagte Liste (8) entweder direkt oder auf Anfrage des betroffenen Mobiltelefons dem betroffenen Mobiltelefon zu übertragen, unter solch einer Form, daß der Benutzer (3) auf auditiver oder visueller Art davon Kenntnis nehmen und eine beschränkte Liste (9) aus der besagten Liste (8) auswählen kann.

19. Server (2) nach Anspruch 18 mit Übertragungsmitteln (2d), um die besagte Liste (8) oder die aktualisierte beschränkte Liste (9) dem betroffenen Mobiltelefon periodisch zu übertragen.

20. Server (2) nach irgendeinem der Ansprüche 17 bis 19, so daß der "angeschaltete und eine Anfrage formulierende" Zustand folgende Anfragen umfaßt:
• Anfrage des automatischen Aufbaus einer Vernetzung mit den Mobiltelefonen, die die gleiche Anfrage formuliert haben;
• Interessenfelder definierende Anfrage; und
• Anfrage der Zustandsänderung.

21. Server (2) nach irgendeinem der Ansprüche 17 bis 20 mit Download-Mitteln (2f), um die besagte Liste (8) oder die besagte beschränkte Liste (9) in das besagte erste Mobiltelefon (1) mit Anzeige der Personen, deren Mobiltelefone sich in der Nähe dieses ersten Mobiltelefons (1) befinden, durch eine Audio- oder visuelle Markierung (10) zu downloaden.

22. Server (2) nach Anspruch 21, wobei die Download-Mittel (2f) für das Downloaden der besagten Liste (8) oder der besagten beschränkten Liste (9) in das besagte erste Mobiltelefon (1) mit Anzeige durch eine Markierung der Personen, deren Mobiltelefone sich in der Nähe dieses ersten Mobiltelefons (1) befinden, so ausgelegt sind, daß die Personen, die sich in der Nähe des ersten Telefons befinden, diejenigen sind, deren Mobiltelefone sich:
• in der gleichen Zelle (4a) wie das betroffene Mobiltelefon befinden; oder
• in Nachbar-Zellen von der Zelle befinden, wo das besagte erste Mobiltelefon (1) platziert ist.

23. Server (2) nach Anspruch 22, wobei:
das besagte Kommunikationsnetz (4) in Zellen (4a) unterteilt ist, wobei jede Zelle einer bestimmten geographischen Fläche entspricht;
- die besagten Zellen (4a) durch eine Zellennummer identifiziert werden;
- die Nummern der Zellen (4a), wo sich die besagten Mobiltelefone befinden, in eine Speicherzone des besagten Servers (2e) und/oder der besagten Mobiltelefone (1e) übertragen und registriert werden;
- der besagte Server (2) eine Speicherzone (2e) aufweist, in der die Nummern der Zellen (4a), wo sich die besagten Mobiltelefone befinden, registriert sind; und
- der besagte Server (2) zusätzlich Rechenmittel (2a) zur Bestimmung der sich in der gleichen Zelle (4a) oder in benachbarten Zellen (4a) befindlichen Mobiltelefone mittels der besagten Zellennummern aufweist.
